# EUROPEAN PATENT SPECIFICATION

(11) **EP 2 731 106 B1**
(45) Date of publication and mention of the grant of the patent: **04.03.2015**
(21) Application number: 12007569.2
(22) Date of filing: 07.11.2012
(51) Int. Cl.: G11B 27/00, G11B 27/034, G11B 23/03, G11B 33/04, G11B 17/03

(54) **Archive system for double sided optical disc**
Archivsystem für doppelseitige optische Platte
Système d'archives pour disque optique double face

(43) Date of publication of application: 14.05.2014
(73) Proprietor: Hitachi-LG Data Storage Korea, Inc., Geumcheon-gu Seoul 153-803 (KR)
(72) Inventor: Yoo, Seunghon, 153-803 Seoul (KR)
(74) Representative: Katérle, Axel

(56) References cited:
- JP-A- H08 249 782
- US-A1- 2001 055 266
- US-A1- 2012 117 578

## Description

### BACKGROUND

### Field

This document relates to an archive system suitable for a double sided optical disc having two data recording surfaces respectively formed on opposite surfaces thereof.

### Related Art

An archive system is a kind of database which keeps digital information converted from collections, data, etc., and maintains and manages relationships between data. The archive system is a system which enables permanent recording, preservation, etc. by digitalizing information that may have a degraded quality or be scattered as time elapses. The archive system does not simply store information but systemizes and store information to be efficiently used.

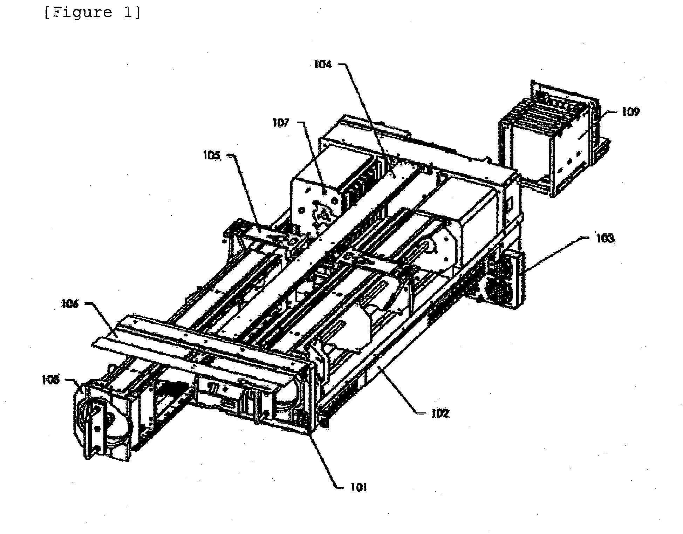

For example, in an archive system, a rail 102 is mounted at a side of a main chassis 101 as shown in FIG. 1, and hence several disc drives can be mounted to a rack of a data center.

A cooling fan is mounted to a rear cover 103 mounted at a rear of the archive system. A disc picker robot 105 moved in a horizontal direction by a linear guide 104 is mounted at the center of the main chassis 101.

If a front door 106 of the archive system is opened, a user can extract, to the outside of the archive system, or insert, into the inside of the archive system, disc cartridges 108 respectively mounted at both sides of the disc picker robot 105. For example, 250 optical discs can be kept in the disc cartridge 108, and thus a maximum of 500 optical discs can be kept in both the disc cartridges 108.

A drive bay is mounted at a rear of the disc cartridge 108. For example, six optical disc drives (ODDs) are inserted into the drive bay. A maximum of twelve ODDs are inserted into drive bays 107 and 109 respectively mounted at left and right sides of the disc picker robot 105, so that recording or reproducing operations of data can be simultaneously performed.

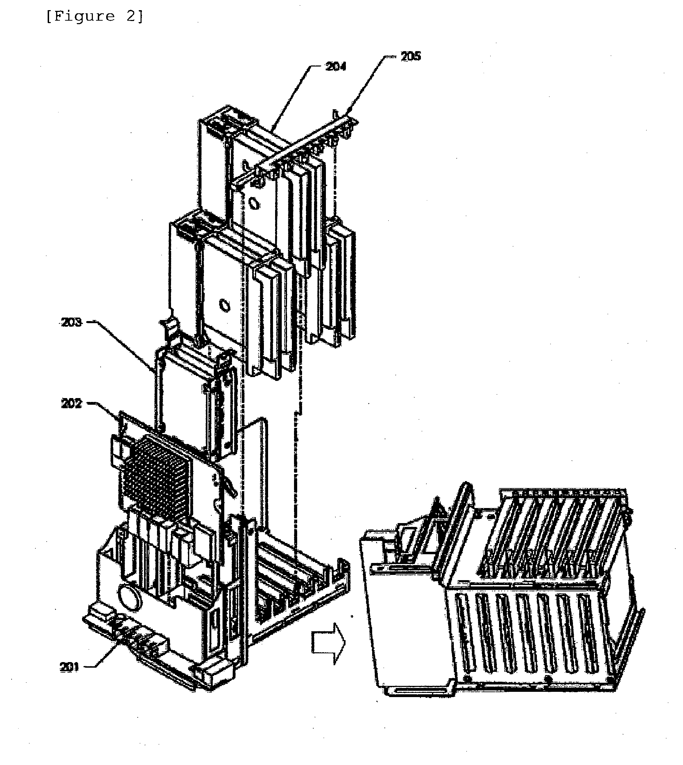

The drive bays 107 and 109 may be referred to as, for example, field replacement units. As shown in FIG. 2, each drive bay may comprise three internal connectors 201, a single board computer (SBC) 202, a hard disc 203 and six ODDs 204. The six ODDs 204 are firmly fixed by a stabilizer 205.

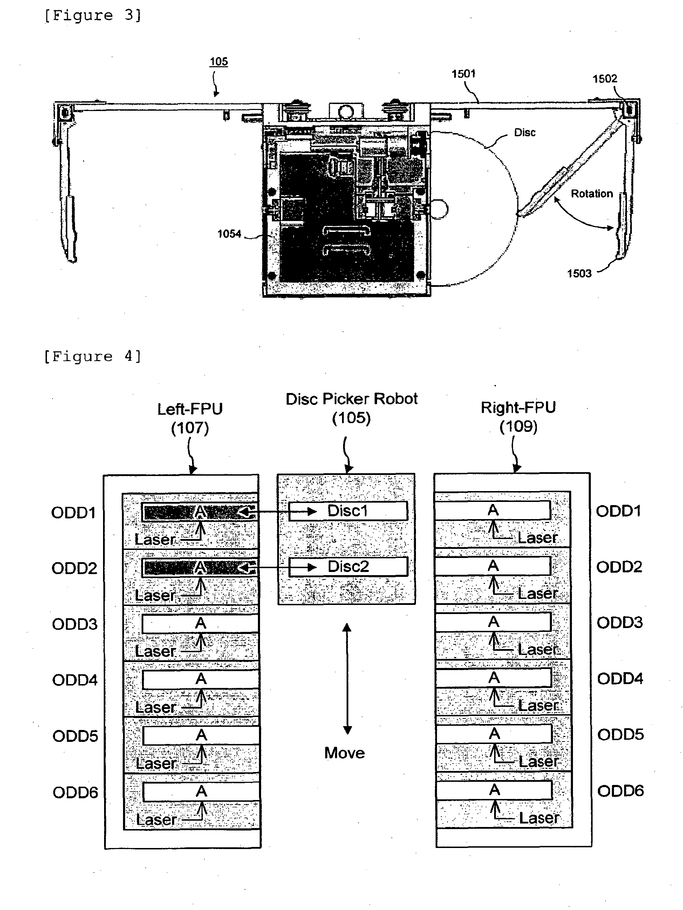

As shown in FIG. 3, the disc picker robot 105 may comprise a main frame 1501, a motor 1502, a kicker 1503 and a picker 1504. For example, two step motors and two kickers may be mounted at both sides of the main frame 1501 having a shoulder shape, respectively.

An optical disc extracted from the disc cartridge is inserted into the picker 1504 by a rotation operation of the kicker 1503. For example, two optical discs can be simultaneously inserted into the picker 1504, and the disc picker robot 105 inserts an optical disc into an arbitrary ODD by passing through central moving paths of the left and right drive bays 107 and 109.

For example, as shown in FIG. 4, first and second optical discs Disc1 and Disc2 extracted and then moved by the disc picker robot 105 may be respectively inserted into first and second optical disc drives ODD1 and ODD2 mounted in the left drive bay 107.

The SBC 202 mounted in the left drive bay 107 performs a series of data recording/reproducing operations of recording or reproducing data on first and second optical discs by controlling the first and second optical disc drives ODD1 and ODD2.

If the data recording/reproducing operations described above are finished, the disc picker robot 105 collects the first and second optical discs, moves the collected optical discs to the original disc cartridge, and then kept the optical discs in the disc cartridge.

However, as shown in FIG. 4, ODDs are mounted in the drive bay 107 so that data can be recorded/reproduced only in one direction. Hence, in case of a double sided optical disc having two data recording surfaces formed on opposite surfaces thereof, there is an inconvenience in that a user should record data on one surface of the double sided optical disc and then turn over the double sided optical disc to be inserted in the opposite direction.

US 2012/117578 discloses a system for optical disc storage, writing and reading including a housing holding at least two optical disc racks and a plurality of read/write drives that may be positioned in line with the storage rack. A track spans the racks, (e.g., a parallel track is positioned between two racks). A shuttle mounted on the track allows transfer of discs from the racks to drives. The shuttle may allow for disc pass through, disc rotation, or have other structures for disc transport.

US 2001/055266 discloses a recording media library apparatus including an inversion unit for inverting a desired or designated recording medium of the double-side recording type so as to correspond to a predetermined driving direction of a drive unit. The inversion unit is installed in any one of a plurality of predetermined installing areas separate from a transport mechanism within the library apparatus. By the inversion unit performing necessary inversion of the double-side recording type medium, the same transport mechanism can be used for recording media of both the double-side recording type and the single-side recording type. Because the inversion unit is provided separately from the transport mechanism, the interior of one recording medium by the inversion unit and the transport of another recording medium by the transport mechanism can be performed concurrently in a parallel fashion.

JP 08/249782 discloses an auto-changer device comprising a tray carrier part constituted to house two trays, while a vacant tray is housed upside down in a separate position from the trays mounting media. When a medium is double-sided, the tray mounting this medium is drawn into the tray carrier part, and the vacant tray is also drawn into a position above the tray opposite to a medium housing part, and when the reverse side of the medium is to be recorded and reproduced, the tray carrier part is rotated by 180 degrees, and the medium is transferred to the vacant tray, and the carrier part is transferred to a drive to perform a recording and reproducing operation.

### SUMMARY

An aspect of this document is to provide an archive system for a double sided optical disc, which enables a data recording or reading operation to be automatically performed on first and second surfaces of the double sided optical disc.

In an aspect, an archive system for a double sided optical disc comprises: a disc cartridge for keeping optical discs; a drive bay for mounting optical disc drives therein; and a disc picker robot for extracting the optical discs kept in the disc cartridge and inserting the extracted optical discs into the optical disc drives mounted in the drive bay, wherein first and second drive bays are respectively mounted at left and right sides of the disc picker robot, and wherein optical disc drives for recording or reading data on first surfaces of double sided optical discs are mounted in the first drive bay, and optical disc drives for recording or reading data on second surfaces of the double sided optical discs are mounted in the second drive bay.

The disc picker robot carries two or more optical discs, and the interval between two optical discs carried by the disc picker robot is identical to that between two optical disc drives mounted in a same drive bay.

The recording or reading operation on a first surface of a double sided optical disc is finished by the optical disc drive of the first drive bay, the disc picker robot extracts the double sided optical disc and then inserts the extracted double sided optical disc into the optical disc drive of the second drive bay.

An insertion slot of the first optical disc drive of the first drive bay and an insertion slot of the second optical disc drive of the second drive bay, which faces the first optical disc drive, are spaced apart from each other at a predetermined distance, along a direction in which the disc picker robot moves, and the disc picker robot extracts the double sided optical disc from the first optical disc drive, moves the extracted double sided optical disc by the predetermined distance and then inserts the double side optical disc into the second optical disc drive.

The first and second drive bays are spaced apart from each other at a predetermined distance so that the insertion slot of the first optical disc drive of the first drive bay and the insertion slot of the second optical disc drive of the second drive bay, which faces the first optical disc drive, are aligned with each other, along the direction in which the disc picker robot moves.

In another aspect, an archive system for a double sided optical disc comprises: a disc cartridge for keeping optical discs; a drive bay for mounting optical disc drives therein; and a disc picker robot for extracting the optical discs kept in the disc cartridge and inserting the extracted optical discs into the optical disc drives mounted in the drive bay, wherein first and second drive bays are respectively mounted at left and right sides of the disc picker robot, wherein an optical disc drive for recording or reading data on a first surface of a double sided optical disc and an optical disc drive for recording or reading data on a second surface of the double sided optical disc, which form a pair, are repetitively mounted in the first and second drive bays, and wherein any one of an optical disc drive of the first drive bay and an optical disc drive of the second bay, which face the optical disc drive of the first drive bay, records or reads data on the first surface, and the other records or reads data on the second surface.

The disc picker robot carries two or more optical discs, and carries the two or more optical discs at an interval between two optical disc drives closest along a direction in which the disc picker robot moves, which record data on surfaces in a same direction.

When carrying two optical discs, the disc picker robot records or reads data on first or second surfaces of the optical discs by respectively inserting the optical discs into a first optical disc drive of the first drive bay and a second disc drive of the second drive bay.

When a data recording or reading operations on the first or second surfaces are finished, the disc picker robot extracts the two optical discs, moves by the interval between an insertion slot of the first optical disc drive of the first drive bay and an insertion slot of the first optical disc drive of the second drive bay, respectively inserts the optical discs into the first optical disc drive of the second drive bay and the second optical disc drive of the first drive bay, and then records or reads data on the second or first surfaces of the optical discs.

In still another aspect, an archive system for a double sided optical disc comprises: a disc cartridge for keeping optical discs; a drive bay for mounting optical disc drives therein; and a disc picker robot for extracting the optical discs kept in the disc cartridge and inserting the extracted optical discs into the optical disc drives mounted in the drive bay, wherein first and second drive bays are respectively mounted at left and right sides of the disc picker robot, wherein n optical disc drives for recording or reading data on first surfaces of double sided optical discs and n optical disc drivers for recording or reading data on second surfaces of double sided optical discs are sequentially mounted in the first drive bay, and wherein n optical disc drives for recording or reading data on second surfaces of double sided optical discs and n optical disc drivers for recording or reading data on first surfaces of double sided optical discs are sequentially mounted in the second drive bay.

In an archive system for a double sided optical disc according to the present invention, data recording/reading operations can be automatically performed on first and second surfaces of the double sided optical disc, so that it is possible to prevent an inconvenience in that a user turns over the double side optical disc to be inserted.

### BRIEF DESCRIPTION OF THE DRAWINGS

FIG. 1 illustrates a configuration of a general archive system.
FIG. 2 illustrates a configuration of a general drive bay.
FIG. 3 illustrates a configuration of a general disc picker robot.
FIG. 4 illustrates an exemplary embodiment in which an optical disc is inserted into an optical disc drive of the general drive bay.
FIGS. 5 and 6 schematically illustrate an archive system for a double sided optical disc according to a first exemplary embodiment of the present invention.
FIGS. 7 and 8 schematically illustrate an archive system for a double sided optical disc according to a second example of the present invention.

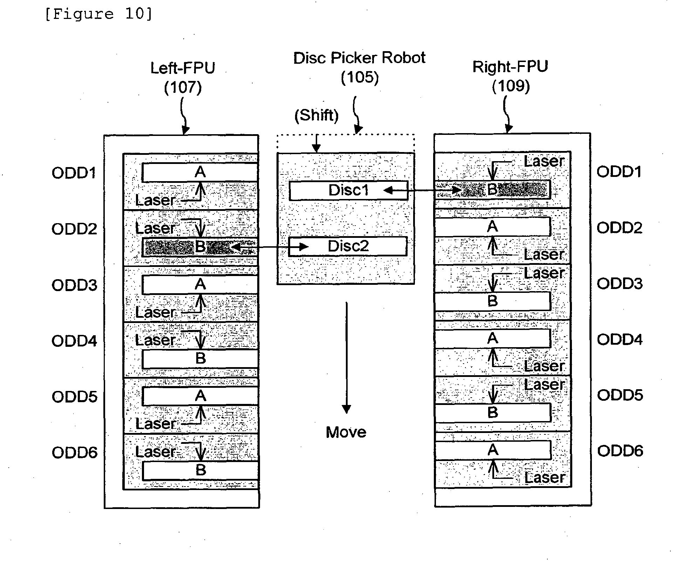

FIGS. 9 and 10 schematically illustrate an archive system for a double sided optical disc according to a third example of the present invention.
FIG. 11 schematically illustrates an archive system for a double sided optical disc according to a fourth example of the present invention.
FIG. 12 schematically illustrates an archive system for a double sided optical disc according to a fifth example of the present invention.

### DETAILED DESCRIPTION

The above objects, characteristics, and merits of this document will become more apparent from the following detailed description taken in conjunction with the accompanying drawings. This document can be modified in various ways and can have several embodiments. Hereinafter, some of the embodiments are shown in the accompanying drawings and described in detail with reference to the drawings. The same reference numerals, as a general rule, designate the same elements throughout the specification. Further, a detailed description of the known functions or constructions will be omitted if it is deemed to make the gist of this document unnecessarily vague. It is also to be noted that numbers (e.g., first and second) used in the description of this document are only identification symbols for distinguishing one element from the other element. The above and other objects, features and advantages of the present invention will become apparent from the following detailed description taken with the accompanying drawings. As the invention allows for various changes and numerous embodiments, particular embodiments will be illustrated in the drawings and described in detail in the written description. Like reference numerals designate like elements throughout the specification. In the following description, detailed descriptions of well-known functions or constructions will be omitted since they would obscure the invention in unnecessary detail.

First, as described with reference to FIGS. 1 to 3, an archive system for a double sided optical disc according to the present invention comprises a disc cartridge for keeping a plurality of optical discs, a drive bay in which a plurality of optical disc drives ODDs are mounted, a disc picker robot for extracting an optical disc kept in the disc cartridge and inserting the extracted optical disc into an ODD of the drive bay, etc.

First and second drive bays, each in which six ODDs are mounted for example, are mounted opposite to each other at left and right sides of the disc picker robot.

The disc picker robot 105 moves while simultaneously loading two or more optical discs. The disc picker robot 105 may simultaneously insert or extract the optical discs into or from ODDs of the drive bay.

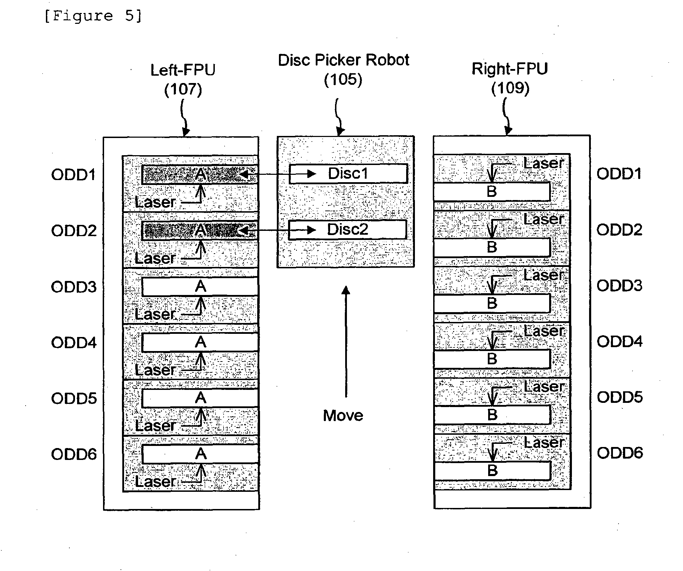

In an archive system according to the first exemplary embodiment of the present invention, as shown in FIG. 5, six ODDs are mounted in the left first drive bay 107 in a direction in which data can be recorded on a first surface A of a double sided optical disc, and six ODDs are mounted in the right second drive bay 109 in a direction in which data can be recorded on a second surface A of the double sided optical disc.

The disc picker robot 105 extracts two double sided optical discs Disc1 and Disc2 kept in the disc cartridge and then inserts the two double sided optical discs respectively into first and second optical disc drives ODD1 and ODD2 mounted in the first drive bay 107 by moving between the first and second drive bays 107 and 109.

A single board computer (SBC) of the first drive bay 107 controls the first and second optical disc drives ODD1 and ODD2 of the first drive bay 107, so as to perform a series of data recording operations of recording data on first surfaces A of the two double sided optical discs Disc1 and Disc2. It will be apparent that the first and second optical disc drives ODD1 and ODD2 may perform data reading operations of reading the data recorded on the first surfaces A of the two double sided optical discs Disc1 and Disc2.

If the data recording operation on the first surface A is finished as described above, the disc picker robot 105 extracts the two double sided optical discs Disc1 and Disc2 and then inserts the two double sided optical discs Disc1 and Disc2 respectively into first and second optical disc drives ODD1 and ODD2 mounted in the second drive bay 109.

An SBC of the second drive bay 109 controls the first and second optical disc drives ODD1 and ODD2 of the second drive bay 109, so as to perform a series of data recording operations of recording data on second surfaces B of the two double sided optical discs Disc1 and Disc2.

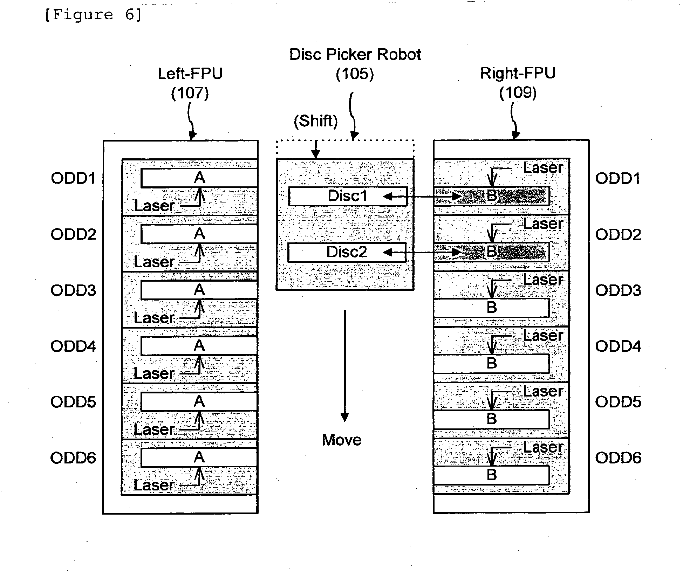

Optical disc insertion slots respectively formed in the ODDs of the first and second drive bays 107 and 109 face each other, and may be mounted, for example, while being spaced apart from each other at a predetermined distance as shown in FIGS. 5 and 6. Hence, the disc picker robot 105 extracts two double sided optical discs from the first and second optical disc drives ODD1 and ODD2 of the first drive bay 107 and then inserts the two double sided optical discs into the respective first and second optical disc drives ODD1 and ODD2 mounted in the second drive bay 109 by moving between the first and second drive bays 107 and 109 by the predetermined distance.

In the first exemplary embodiment of FIGS. 5 and 6, the interval between the insertion slots through which the optical discs are into adjacent ODDs of the first drive bay 107 is constant (similar to the second drive bay 109). Thus, the interval between two or more optical discs loaded by the disc picker robot 105 that carries the optical discs is set to be identical to that between the insertions slots, so that the disc picker robot 105 can simultaneously insert/extract two optical discs into/from the ODDs. In the first exemplary embodiment, when inserting the optical discs from the ODDs of the first drive bay 107 into the second drive bay 109, the disc picker robot 105 moves by a certain interval at which the positions of the two drive bays 107 and 109 cross each other.

Accordingly, data can be automatically recorded on the first and second surfaces of the double sided optical disc without user's turning over the double sided optical disc and inserting the double sided optical disc in the opposite direction.

Meanwhile, in an archive system according to a second example of the present invention, six ODDs that can record data on first surfaces A of double sided optical discs are mounted in the left first drive bay 107, and six ODDs that can record data on second surfaces B of double sided optical discs are mounted in the right second drive bay 109. The first and second drive bays 107 and 109 are mounted while being spaced apart from each other at a predetermined distance, along the direction in which the disc picker robot 105 moves.

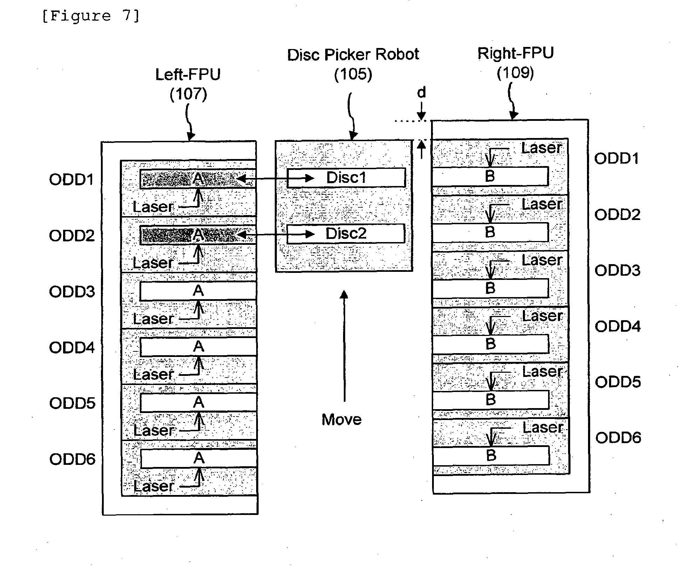

For example, as shown in FIG. 7, the first and second drive bays 107 and 109 are mounted while being spaced apart from each other at a predetermined distance d measured as the result of a previously performed experiment so that optical disc insertion slots respectively formed in the ODDs of the first and second drive bays 107 and 109 face each other at the same position, i.e., so that the two insertion slots of the two ODDs, which face each other, are aligned with each other, based on the direction in which the disc picker robot 105 moves.

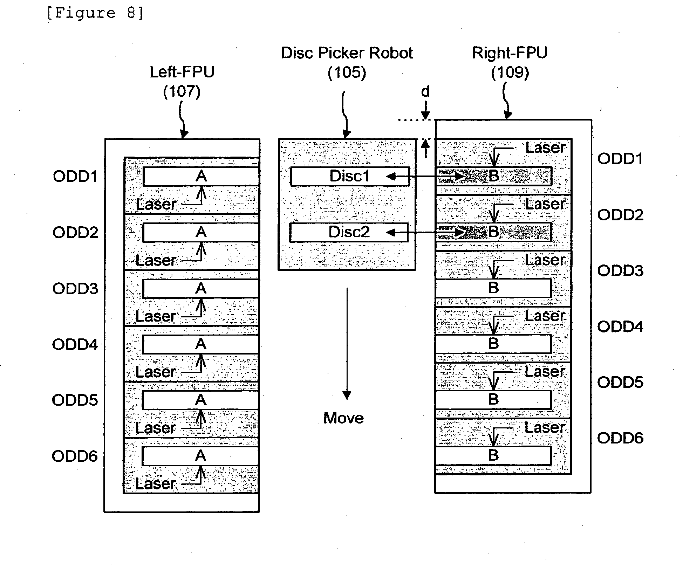

As shown in FIG. 8, the disc picker robot 105 more quickly inserts two double sided optical discs extracted from the respective first and second ODDs of the first drive bay 107into the first and second ODDs of the second drive bay 109 without any separate movement, so that data can be automatically recorded on the first and second surfaces of the double sided optical disc.

Meanwhile, in an archive system according to a third example, an ODD capable of recording data on the first surface A of the double sided optical disc and an ODD capable of recording data on the second surface B of the double sided optical disc form a pair, so as to be repetitively mounted in the left first drive bay and the right second drive bay.

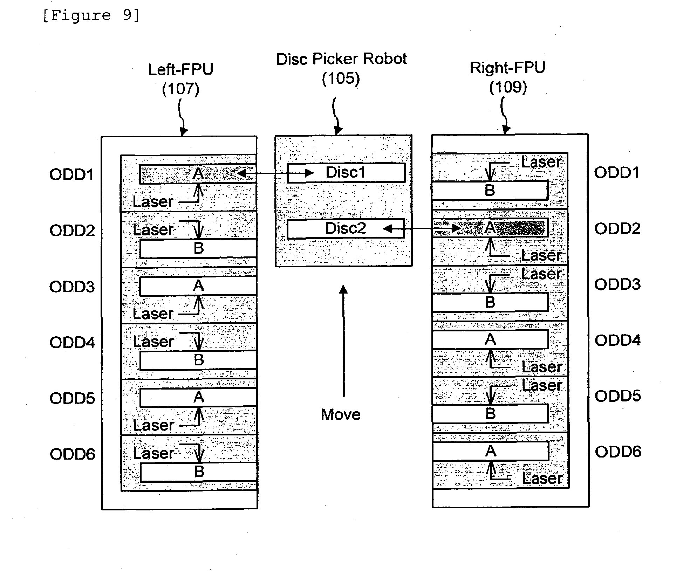

For example, as shown in FIG. 9, a pair of ODDs capable of respectively recording data on the first and second surfaces A and B are repetitively mounted in the left first drive bay 107, and a pair of ODDs capable of respectively recording data on the second and first surfaces B and A are repetitively mounted in the right second drive bay 109. In this case, the data recording surfaces of the ODDs opposite to each other, i.e., the first optical disc drive ODD1 of the first drive bay 107 and the first optical disc drive ODD1 of the second drive bay 109, are different from each other as the first and second surfaces A and B.

In the disc picker robot 105, the interval between two or more optical discs loaded by the disc picker robot 105 may be set to that between two closest ODDs that record data on surfaces in the same direction. In FIG. 9, the first optical disc drive ODD1 of the first drive bay 107 and the second optical disc drive ODD2 of the second drive bay 109, which record data on the first surfaces A, are closest to each other. Thus, the disc picker robot 105 can load two optical discs at the interval between the two ODDs.

The disc picker robot 105 extracts two double sided optical discs Disc1 and Disc2 kept in the disc cartridge and then inserts the first optical disc Disc1 into the first optical disc drive ODD1 mounted in the first drive bay 107, and inserts the second optical disc Disc2 into the second optical disc drive ODD2 mounted in the second drive bay 109 by moving between the first and second drive bays 107 and 109 by the interval between the insertion slot of the first optical disc drive ODD1 of the first drive bay 107 and the insertion slot of the first optical disc drive ODD1 of the second drive bay 109.

The SBC of the first drive bay 107 records data on the first surface of the first optical disc by controlling the first optical disc drive ODD1 of the first drive bay 107. The SBC of the second drive bay 109 records data on the first surface of the second optical disc by controlling the second optical disc drive ODD2 of the second drive bay 109.

If the data recording operation on the first surface A is finished as described above, the disc picker robot 105 extracts the two double sided discs Disc1 and Disc2 and then inserts the first and second optical discs Disc1 and Disc2 respectively into the first optical disc drive ODD1 mounted in the second drive bay 109 and the second optical disc drive ODD2 mounted in the first drive bay 107 by moving between the first and second drive bays 107 and 109 by the interval between the insertion slot of the first optical disc drive ODD1 of the first drive bay 107 and the insertion slot of the first optical disc drive ODD1 of the second drive bay 109.

The SBC of the first drive bay 107 records data on the second surface of the second optical disc by controlling the second optical disc drive ODD2 of the first drive bay 107, and records data on the second surface of the first optical disc by controlling the first optical disc drive ODD1 of the second drive bay 109.

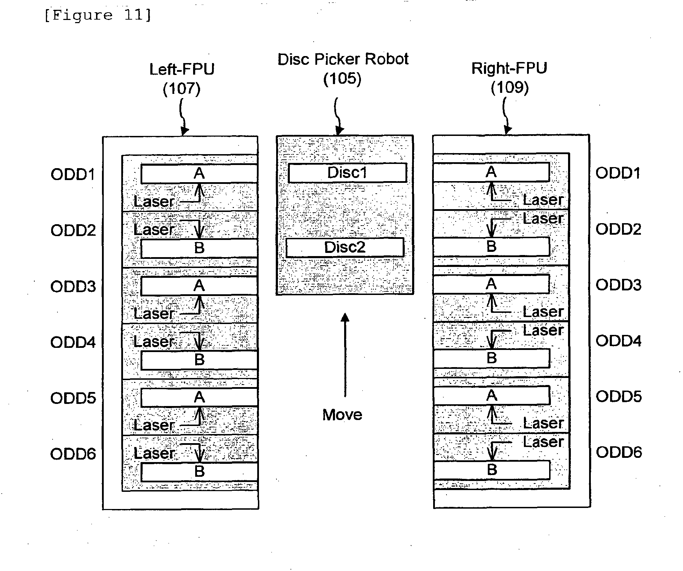

Meanwhile, in an archive system according to a fourth example of the present invention, an ODD capable of recording data on the first surface A of the double sided optical disc and an ODD capable of recording data on the second surface B of the double sided optical disc form a pair, so as to be repetitively mounted in the left first drive bay and the right second drive bay. For example, as shown in FIG. 11, ODDs respectively mounted in the first and second drive bays may be mounted to face each other.

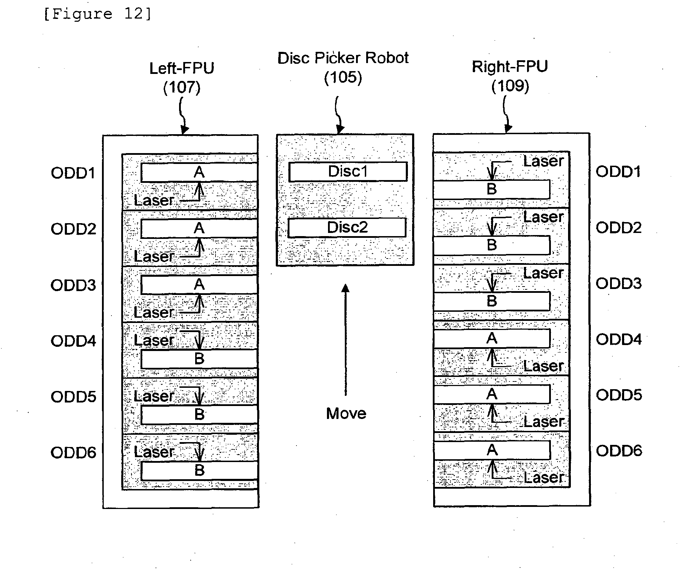

In an archive system according to a fifth example of the present invention, as shown in FIG. 12, three ODDs for recording data the first surfaces of the double sided optical discs and three ODDs for recording data the second surfaces of the double sided optical discs may be sequentially mounted in the first drive bay.

Three ODDs for recording data the second surfaces of the double sided optical discs and three ODDs for recording data the first surfaces of the double sided optical discs may also be sequentially mounted in the second drive bay.

In this case, data recording operations on the double sided optical discs may be performed using only the ODDs of the first drive bay 107 or using only the ODDs of the second drive bay 109.

While we have shown and described several embodiments in accordance with the present invention, it is understood that the same is not limited thereto but is susceptible of numerous changes and modifications as known to those skilled in the art, and we therefore do not wish to be limited to the details shown and described herein but intended to cover all such changes and modifications as are encompassed by the scope of the appended claims.

## Claims

1. An archive system for a double sided optical disc, comprising:
a disc cartridge for keeping optical discs;
a drive bay (107, 109) for mounting optical disc drives therein; and
a disc picker robot (105) for extracting the optical discs kept in the disc cartridge and inserting the extracted optical discs into the optical disc drives mounted in the drive bay (107, 109),
wherein first and second drive bays (107, 109) are respectively mounted at left and right sides of the disc picker robot (105);
**characterized in that**:
optical disc drives for recording or reading data on first surfaces of double sided optical discs are mounted in the first drive bay (107), and optical disc drives for recording or reading data on second surfaces of the double sided optical discs are mounted in the second drive bay (109).

2. The archive system of claim 1, wherein the disc picker robot (105) is configured to carry two or more optical discs, and an interval between two optical discs carried by the disc picker robot (105) is identical to that between two optical disc drives mounted in a same drive bay (107, 109).

3. The archive system of claim 1, wherein, when a recording or reading operation on a first surface of a double sided optical disc is finished by the optical disc drive of the first drive bay (107), the disc picker robot (105) is configured to extract the double sided optical disc and then insert the extracted double sided optical disc into the optical disc drive of the second drive bay (109).

4. The archive system of claim 3, wherein an insertion slot of a first optical disc drive of the first drive bay (107) and an insertion slot of a second optical disc drive of the second drive bay (109), which faces the first optical disc drive, are spaced apart from each other at a predetermined distance, along a direction in which the disc picker robot (105) is configured to move, and the disc picker robot (105) is configured to extract the double sided optical disc from the first optical disc drive (107), move the extracted double sided optical disc by the predetermined distance and then insert the double side optical disc into the second optical disc drive (109).

5. The archive system of claim 3, wherein the first and second drive bays (107, 109) are spaced apart from each other at a predetermined distance so that an insertion slot of a first optical disc drive of the first drive bay (107) and an insertion slot of a second optical disc drive of the second drive bay (109), which faces the first optical disc drive, are aligned with each other, along the direction in which the disc picker robot (105) is configured to move.

6. An archive system for a double sided optical disc, comprising:
a disc cartridge for keeping optical discs;
a drive bay (107, 109) for mounting optical disc drives therein; and
a disc picker robot (105) for extracting the optical discs kept in the disc cartridge and inserting the extracted optical discs into the optical disc drives mounted in the drive bay (107, 109),
wherein first and second drive bays (107, 109) are respectively mounted at left and right sides of the disc picker robot (105),
**characterized in that**:
an optical disc drive for recording or reading data on a first surface of a double sided optical disc and an optical disc drive for recording or reading data on a second surface of the double sided optical disc, which form a pair, are repetitively mounted in the first and second drive bays (107, 109; and
wherein one of an optical disc drive of the first drive bay (107) and an optical disc drive of the second bay (109), which face the optical disc drive of the first drive bay (107), is configured to record or read data on the first surface, and the other is configured to record or read data on the second surface.

7. The archive system of claim 6, wherein the disc picker robot (105) is configured to carry two or more optical discs, and to carry the two or more carry optical discs at an interval between two optical disc drives closest along a direction in which the disc picker robot (105) is configured to move, which record data on surfaces in a same direction.

8. The archive system of claim 7, wherein, when carrying two optical discs, the disc picker robot (105) is configured to record or read data on first or second surfaces of the optical discs by respectively inserting the optical discs into a first optical disc drive of the first drive bay (107) and a second disc drive of the second drive bay (109).

9. The archive system of claim 8, wherein, when a data recording or reading operations on the first or second surfaces are finished, the disc picker robot (105) is configured to extract the two optical discs, move by the interval between an insertion slot of the first optical disc drive of the first drive bay (107) and an insertion slot of the first optical disc drive of the second drive bay (109), respectively insert the optical discs into the first optical disc drive of the second drive bay (109) and the second optical disc drive of the first drive bay (107), and then record or reads data on the second or first surfaces of the optical discs.

10. An archive system for a double sided optical disc, comprising:
a disc cartridge for keeping optical discs;
a drive bay (107, 109) for mounting optical disc drives therein; and
a disc picker robot (105) for extracting optical discs kept in the disc cartridge and inserting the extracted optical discs into optical disc drives mounted in the drive bay (107, 109),
wherein first and second drive bays (107, 109) are respectively mounted at left and right sides of the disc picker robot (105);
**characterized in that**:
n optical disc drives for recording or reading data on first surfaces of double sided optical discs and n optical disc drivers for recording or reading data on second surfaces of double sided optical discs are sequentially mounted in the first drive bay (107); and
n optical disc drives for recording or reading data on second surfaces of double sided optical discs and n optical disc drivers for recording or reading data on first surfaces of double sided optical discs are sequentially mounted in the second drive bay (109).

## Patentansprüche

1. Archivsystem für eine doppelseitige optische Platte, das umfasst:
- eine Plattenkassette zur Aufbewahrung optischer Platten,
- einen Laufwerkschacht (107, 109) zur Befestigung optischer Plattenlaufwerke darin, und
- einen Plattenaufnahmeroboter (105) zum Entnehmen der in der Plattenkassette aufbewahrten optischen Platten und Einsetzen der entnommenen optischen Platten in die im Laufwerkschacht (107, 109) befestigten optischen Plattenlaufwerke,
- wobei der erste und zweite Laufwerkschacht (107, 109) jeweils auf der linken und rechten Seite des Plattenaufnahmeroboters (105) befestigt sind,
- **dadurch gekennzeichnet, dass**
- optische Plattenlaufwerke zum Aufzeichnen oder Auslesen von Daten auf ersten Oberflächen doppelseitiger optischer Platten im ersten Laufwerkschacht (107) und optische Plattenlaufwerke zum Aufzeichnen oder Auslesen von Daten auf zweiten Oberflächen der doppelseitigen optischen Platten im zweiten Laufwerkschacht (109) befestigt sind.

2. Archivsystem nach Anspruch 1, wobei der Plattenaufnahmeroboter (105) dafür konfiguriert ist, zwei oder mehr optische Platten zu transportieren, und wobei ein Abstand zwischen zwei durch den Plattenaufnahmeroboter (105) transportierten optischen Platten identisch mit dem zwischen zwei im selben Laufwerkschacht (107, 109) befestigten optischen Plattenlaufwerken ist.

3. Archivsystem nach Anspruch 1, wobei, wenn ein Aufzeichnungs- oder Auslesevorgang auf einer ersten Oberfläche einer doppelseitigen optischen Platte durch das optische Plattenlaufwerk des ersten Laufwerkschachts (107) abgeschlossen ist, der Plattenaufnahmeroboter (105) dafür konfiguriert ist, die doppelseitige optische Platte zu entnehmen und dann die entnommene doppelseitige optische Platte in das optische Plattenlaufwerk des zweiten Laufwerkschachts (109) einzusetzen.

4. Archivsystem nach Anspruch 3, wobei ein Einführschlitz eines ersten optischen Plattenlaufwerks des ersten Laufwerkschachts (107) und ein Einführschlitz eines zweiten optischen Plattenlaufwerks des zweiten Laufwerkschachts (109), der dem ersten optischen Plattenlaufwerk zugewandt ist, unter einem vorgegebenen Abstand voneinander längs einer Richtung angeordnet sind, in der der Plattenaufnahmeroboter (105) konfiguriert ist, sich zu bewegen, und wobei der Plattenaufnahmeroboter (105) dafür konfiguriert ist, die doppelseitige optische Platte aus dem ersten optischen Plattenlaufwerk (107) zu entnehmen, die entnommene doppelseitige optische Platte über den vorgegebenen Abstand zu bewegen und die doppelseitige optische Platte dann in das zweite optische Plattenlaufwerk (109) einzusetzen.

5. Archivsystem nach Anspruch 3, wobei der erste und der zweite Laufwerkschacht (107, 109) unter einem vorgegebenen Abstand voneinander angeordnet sind, so dass ein Einführschlitz eines ersten optischen Plattenlaufwerks des ersten Laufwerkschachts (107) und ein Einführschlitz eines zweiten optischen Plattenlaufwerks des zweiten Laufwerkschachts (109), der dem ersten optischen Plattenlaufwerk zugewandt ist, längs der Richtung, in der der Plattenaufnahmeroboter (105) konfiguriert ist, sich zu bewegen, miteinander fluchten.

6. Archivsystem für eine doppelseitige optische Platte, das umfasst:
- eine Plattenkassette zur Aufbewahrung optischer Platten,
- einen Laufwerkschacht (107, 109) zur Befestigung optischer Plattenlaufwerke darin, und
- einen Plattenaufnahmeroboter (105) zum Entnehmen der in der Plattenkassette aufbewahrten optischen Platten und Einsetzen der entnommenen optischen Platten in die im Laufwerkschacht (107, 109) befestigten optischen Plattenlaufwerke,
- wobei der erste und zweite Laufwerkschacht (107, 109) jeweils auf der linken und rechten Seite des Plattenaufnahmeroboters (105) befestigt sind,
- **dadurch gekennzeichnet, dass**
- ein optisches Plattenlaufwerk zum Aufzeichnen oder Auslesen von Daten auf einer ersten Oberfläche einer doppelseitigen optischen Platte und ein optisches Plattenlaufwerk zum Aufzeichnen oder Auslesen von Daten auf einer zweiten Oberfläche der doppelseitigen optischen Platte, die ein Paar bilden, wiederholt im ersten und zweiten Laufwerkschacht (107, 109) befestigt werden, und
- wobei ein optisches Plattenlaufwerk des ersten Laufwerkschachts (107) oder ein optisches Plattenlaufwerk des zweiten Schachts (109), das dem optischen Plattenlaufwerk des ersten Laufwerkschachts (107) zugewandt ist, dafür konfiguriert ist, Daten auf der ersten Oberfläche aufzuzeichnen oder auszulesen und das andere dafür konfiguriert ist, Daten auf der zweiten Oberfläche aufzuzeichnen oder auszulesen.

7. Archivsystem nach Anspruch 6, wobei der Plattenaufnahmeroboter (105) dafür konfiguriert ist, zwei oder mehr optische Platten zu transportieren und die zwei oder mehr transportierten optischen Platten mit einem Abstand zwischen zwei optischen Plattenlaufwerken, die sich längs einer Richtung, in der der Plattenaufnahmeroboter (105) konfiguriert ist, sich zu bewegen, am nächsten sind, zu transportieren und die Daten auf Oberflächen in derselben Richtung aufzeichnen.

8. Archivsystem nach Anspruch 7, wobei der Plattenaufnahmeroboter (105), beim Transport von zwei optischen Platten, dafür konfiguriert ist, Daten auf ersten oder zweiten Oberflächen der optischen Platten durch Einsetzen der optischen Platten jeweils in ein erstes optisches Plattenlaufwerk des ersten Laufwerkschachts (107) und ein zweites optisches Plattenlaufwerk des zweiten Laufwerkschachts (109) aufzuzeichnen oder auszulesen.

9. Archivsystem nach Anspruch 8, wobei, wenn Daten-Aufzeichnungs- oder Auslesevorgänge auf den ersten oder zweiten Oberflächen abgeschlossen sind, der Plattenaufnahmeroboter (105) dafür konfiguriert ist, die zwei optischen Platten zu entnehmen, sich über den Abstand zwischen einem Einführschlitz des ersten optischen Plattenlaufwerks des ersten Laufwerkschachts (107) und einem Einführschlitz des ersten optischen Plattenlaufwerks des zweiten Laufwerkschachts (109) zu bewegen, die optischen Platten jeweils in das erste optische Plattenlaufwerk des zweiten Laufwerkschachts (109) und das zweite optische Plattenlaufwerk des ersten Laufwerkschachts (107) einzusetzen und dann Daten auf den zweiten oder ersten Oberflächen der optischen Platten aufzuzeichnen oder auszulesen.

10. Archivsystem für eine doppelseitige optische Platte, das umfasst:
- eine Plattenkassette zur Aufbewahrung optischer Platten,
- einen Laufwerkschacht (107, 109) zur Befestigung optischer Plattenlaufwerke darin, und
- einen Plattenaufnahmeroboter (105) zum Entnehmen in der Plattenkassette aufbewahrter optischer Platten und Einsetzen der entnommenen optischen Platten in die im Laufwerkschacht (107, 109) befestigten optischen Plattenlaufwerke,
- wobei der erste und zweite Laufwerkschacht (107, 109) jeweils auf der linken und rechten Seite des Plattenaufnahmeroboters (105) befestigt sind,
- **dadurch gekennzeichnet, dass**
- n optische Plattenlaufwerke zum Aufzeichnen oder Auslesen von Daten auf ersten Oberflächen doppelseitiger optischer Platten und n optische Plattenlaufwerke zum Aufzeichnen oder Auslesen von Daten auf zweiten Oberflächen doppelseitiger optischer Platten nacheinander im ersten Laufwerkschacht (107) befestigt sind, und
- n optische Plattenlaufwerke zum Aufzeichnen oder Auslesen von Daten auf zweiten Oberflächen doppelseitiger optischer Platten und n optische Plattenlaufwerke zum Aufzeichnen oder Auslesen von Daten auf ersten Oberflächen doppelseitiger optischer Platten nacheinander im zweiten Laufwerkschacht (109) befestigt sind.

## Revendications

1. Système d'archives pour un disque optique double face, comprenant :
une cartouche de disques destinée à conserver les disques optiques ;
une unité de logement (107, 109) destinée à monter des unités de disques optiques dans celle-ci ; et
un robot (105) sélecteur de disques destiné à extraire les disques optiques conservés dans la cartouche de disques et à insérer les disques optiques extraits dans les unités de disques optiques montées dans l'unité de logement (107, 109),
dans lequel des première et deuxième unités de logement (107, 109) sont respectivement montées au niveau des côtés gauche et droit du robot (105) sélecteur de disques ;
**caractérisé en ce que** :
des unités de disques optiques destinées à enregistrer ou à lire des données sur les premières surfaces des disques optiques double face sont montées dans la première unité de logement (107), et des unités de disques optiques destinées à enregistrer ou à lire des données sur les deuxièmes surfaces des disques optiques double face sont montées dans la deuxième unité de logement (109).

2. Système d'archives selon la revendication 1, dans lequel le robot (105) sélecteur de disques est configuré pour transporter deux disques optiques ou plus, et un intervalle entre deux disques optiques transportés par le robot (105) sélecteur de disques est identique à celui entre deux unités de disques optiques montées dans une même unité de logement (107, 109).

3. Système d'archives selon la revendication 1, dans lequel, lorsqu'une opération d'enregistrement ou de lecture sur une première surface d'un disque optique double face est terminée par l'unité de disques optiques de la première unité de logement (107), le robot (105) sélecteur de disques est configuré pour extraire le disque optique double face et ensuite insérer le disque optique double face extrait dans l'unité de disques optiques de la deuxième unité de logement (109).

4. Système d'archives selon la revendication 3, dans lequel une fente d'insertion d'une première unité de disques optiques de la première unité de logement (107) et une fente d'insertion d'une deuxième unité de disques optiques de la deuxième unité de logement (109), qui est en regard de la première unité de disques optiques, sont espacées l'une de l'autre d'une distance prédéterminée, le long d'une direction dans laquelle le robot (105) sélecteur de disques est configuré pour se déplacer, et le robot (105) sélecteur de disques est configuré pour extraire le disque optique double face de la première unité de disques optiques (107), déplacer le disque optique double face extrait de la distance prédéterminée et ensuite insérer le disque optique double face dans la deuxième unité de disques optiques (109).

5. Système d'archives selon la revendication 3, dans lequel les première et deuxième unités de logement (107, 109) sont espacées l'une de l'autre d'une distance prédéterminée de sorte qu'une fente d'insertion d'une première unité de disques optiques de la première unité de logement (107) et une fente d'insertion d'une deuxième unité de disques optiques de la deuxième unité de logement (109), qui est en regard de la première unité de disques optiques, sont alignées l'une l'autre, le long de la direction dans laquelle le robot (105) sélecteur de disques est configuré pour se déplacer.

6. Système d'archives pour un disque optique double face, comprenant :
une cartouche de disques destinée à conserver des disques optiques ;
une unité de logement (107, 109) destinée à monter des unités de disques optiques dans celle-ci ; et
un robot (105) sélecteur de disques destiné à extraire les disques optiques conservés dans la cartouche de disques et à insérer les disques optiques extraits dans les unités de disques optiques montées dans l'unité de logement (107, 109),
dans lequel des première et deuxième unités de logement (107, 109) sont respectivement montées au niveau des côtés gauche et droit du robot (105) sélecteur de disques,
**caractérisé en ce que** :
une unité de disques optiques destinée à enregistrer ou à lire des données sur une première surface d'un disque optique double face et une unité de disques optiques destinée à enregistrer ou à lire des données sur une deuxième surface du disque optique double face, qui forment une paire, sont respectivement montées dans les première et deuxième unités de logement (107, 109) ; et
dans lequel l'une parmi une unité de disques optiques de la première unité de logement (107) et une unité de disques optiques de la deuxième unité de logement (109), qui est en regard de l'unité de disques optiques de la première unité de logement (107), est configurée pour enregistrer ou lire des données sur la première surface, et l'autre est configurée pour enregistrer ou lire des données sur la deuxième surface.

7. Système d'archives selon la revendication 6, dans lequel le robot (105) sélecteur de disques est configuré pour transporter deux disques optiques ou plus, et pour transporter les deux disques optiques ou plus à un intervalle entre les deux unités de disques optiques les plus proches le long de la direction dans laquelle le robot (105) sélecteur de disques est configuré pour se déplacer, qui enregistrent les données sur les surfaces dans une même direction.

8. Système d'archives selon la revendication 7, dans lequel, lors du transport des deux disques optiques, le robot (105) sélecteur de disques est configuré pour enregistrer ou lire des données sur une première ou une deuxième surface des disques optiques en insérant respectivement les disques optiques dans une première unité de disques optiques de la première unité de logement (107) et une deuxième unité de disques de la deuxième unité de logement (109).

9. Système d'archives selon la revendication 8, dans lequel, lorsque des opérations d'enregistrement ou de lecture de données sur les premières ou deuxièmes surfaces sont terminées, le robot (105) sélecteur de disques est configuré pour extraire les deux disques optiques, se déplacer de l'intervalle entre une fente d'insertion de la première unité de disques optiques de la première unité de logement (107) et une fente d'insertion de la première unité de disques optiques de la deuxième unité de logement (109), insérer respectivement les disques optiques dans la première unité de disques optiques de la deuxième unité de logement (109) et la deuxième unité de disques optiques de la première unité de logement (107), et ensuite enregistrer ou lire les données sur les deuxièmes ou premières surfaces des disques optiques.

10. Système d'archives pour un disque optique double face, comprenant :
une cartouche de disques destinée à conserver des disques optiques ;
une unité de logement (107, 109) destinée à monter des unités de disques optiques dans celle-ci ; et
un robot (105) sélecteur de disques destiné à extraire les disques optiques conservés dans la cartouche de disques et insérer les disques optiques extraits dans les unités de disques optiques montées dans les unités de logement (107, 109),
dans lequel les première et deuxième unités de logement (107, 109) sont respectivement montées au niveau des côtés gauche et droit du robot (105) sélecteur de disques ;
**caractérisé en ce que** :
n unités de disques optiques destinées à enregistrer ou à lire des données sur les premières surfaces des disques optiques double face et n unités de disques optiques destinées à enregistrer ou à lire des données sur les deuxièmes surfaces des disques optiques double face sont montées séquentiellement dans la première unité de logement (107) ; et
n unités de disques optiques destinées à enregistrer ou à lire des données sur les deuxièmes surfaces des disques optiques double face et n unités de disques optiques destinées à enregistrer ou à lire des données sur les premières surfaces des disques optiques double face sont montées séquentiellement dans la deuxième unité de logement (109).
